# EUROPEAN PATENT SPECIFICATION

(11) **EP 1 487 584 B1**
(45) Date of publication and mention of the grant of the patent: **25.06.2008**
(21) Application number: 02718439.9
(22) Date of filing: 25.03.2002
(51) Int. Cl.: B02B 3/00, B02B 1/00, A23L 1/182

(54) **DECORTICATED FINGER MILLET (ELEUSINE CORACANA) AND PROCESS FOR ITS PREPARATION**
GESCHÄLTE FINGERHIRSE (ELEUSINE CORACANA) UND PROZESS ZUR DEREN HERSTELLUNG
MIL ROUGE DECORTIQUE (ELEUSINE CORACANA) ET SON PROCEDE DE PREPARATION

(43) Date of publication of application: 22.12.2004
(73) Proprietor: COUNCIL OF SCIENTIFIC AND INDUSTRIAL RESEARCH, New Delhi 110 001 (IN)
(72) Inventor: MALLESHI, N.G., Ctrl Food Technological Res. Inst., Karnataka 570 013 (IN)
(74) Representative: Gaunt, Robert John
(86) International application number: PCT/IB2002/001081
(87) International publication number: WO 2003/080248

(56) References cited:
- EP-A- 0 295 774
- FR-A- 778 710
- GB-A- 669 900
- VIMALA V; KAMESWARI S L; RATNAPRABHA C: "Milling techniques adopted by tribals of Vizianagaram (district) for various food grains" BULLETIN OF GRAIN TECHNOLOGY, vol. 25, no. 1, 1987, pages 30-36, XP009002761
- MALLESHI H G; DAODU M A; CHANDRASEKHAR A: "Development of weaning food formulations based on malting and roller drying of sorghum and cowpea" INTERNATIONAL JOURNAL OF FOOD SCIENCE AND TECHNOLOGY, vol. 24, no. 5, 1989, pages 511-519, XP009002805

## Description

### TECHNICAL FIELD

The present invention relates to a decorticated finger millet (*Eleusine coracana*) and a process for preparing the decorticated finger millet.

### BACKGROUND ART

Finger millet (Ragi) is a small seeded, light brown to brick red colored minor cereal. It is a good source of carbohydrates, sulfur amino acids, dietary fiber and micronutrients and is the richest source of calcium among the cereals. Most of the millet produced is pulverized and the whole meal is utilized for preparation of traditional Indian foods such as unleavened pancakes *(roti)* and thick porridge or dumpling *(mudde).* A small proportion is utilized to prepare popped and malt foods also. Epidemiological reports indicate that, regular consumption of the millet reduces incidences of *diabetes mellitus, cardiovascular diseases, duodenal ulcer* and other *gastrointestinal tract* related disorders. The millet is not amenable for cooking in the form of grains similar to rice, because, the seed coat of the millet grains is not removed and the seed coat not only affects the cooking quality but also its eating quality. Hence, the millet is always pulverized and the flour is used for food preparation and never cooked in the grain form. The endosperm of the millet is of floury texture but it is covered with the rigid seed coat. Since, the seed coat is firmly attached to the endosperm, both the endosperm and the seed coat fragment together to fine grits and flour during decortication or milling. Hence, efforts to decorticate the millet by hitherto known processes have not been successful Therefore, the whole grain millet is pulverized and the meal is utilized for various food preparations. The pulverized seed coat imparts dark color, coarse fibrous texture and characteristic odor to the millet foods. These factors not only affect the nutritional quality of the millet products but also hinder their acceptability, especially by the non-traditional millet consumers.

Reference may be made to P.P. Kurien and H.S.R. Desikachar {Refining of millet flours - 1. Ragi (Eleusine coracana). Journal of Food Science (Mysore), Vol. 11, 136 - 137, 1962}, wherein, the millet was steamed for about 2 min, moistened with 5% additional water, pulverized in Wiley mill and the meal was sifted through 250 n screen, to prepare a flour with a lower proportion of husk (seed coat) content.

Reference may also be made to P.P. Kurien and H.S.R. Desikachar {Preparation of a refined white flour from ragi (Eleusine coracana) using a laboratory mill. Journal of Food, Science and Technology, Vol. 3, 56 - 58, 1966}, wherein, moist-conditioning and milling the millet in laboratory wheat mill was effective for preparation of refined millet flour (the flour containing very low levels of seed coat).

The millet kernels were hardened by soaking in water at 65° C for 3 hr, steaming for 30 min at atmospheric pressure and drying the same. The wet heat treatment enabled to prepare grits {H.S.R. Desikachar, Effect of wet heat treatment on the culinary qualities of ragi (Eleusine coracana). Journal of Food Science and Technology, Vol. 9, 149 - 150, 1972}. However, the seed coat was intact with the grits and affected the culinary and the sensory qualities of the foods prepared from the grits.

Wet heat treatment comprising of soaking the rough rice or paddy *(Oriza sativa)* in water, followed by steaming and drying, *(parboiling),* hardens the rice endosperm, heals, the cracks and improves its milling efficiency by minimizing the breakage during dehusking and debranning. This treatment to rice has also been shown to enhance its nutritional quality by increased retention of thiamine, minerals besides, improves the texture of cooked rice by reducing the stickiness also (K.R. Bhattacharya and S.Z. AH, Changes in rice during parboiling and properties of parboiled rice. In: Advances in Cereal Science and Technology, Vol. 7, 105 - 167,1985).

Likewise, hardening the endosperm of soft wheat by wet heat treatment *(Bulgar* wheat) is practiced to prepare large grits or wheat cracks from soft wheat (A. W. Suhasini and N. G. Malleshi, Studies on preparation, popping and functional properties of bulgar wheat. Die Nahrung, Vol. 38, 568 - 577, 1994).

The drawbacks of the hitherto followed millet milling processes are that, following these methods only grits and flour from the millet could be prepared, and not the decorticated millet grains. The process followed for milling of wet heat treated rice and wheat can not be applied to finger millet, because, the morphology of millet kernels (smaller size, spherical shape and intactness of the seed coat with the endosperm) differs totally from that of rice (the husk that covers the rice is a separate entity which is loosely attached with the inner caryopsis) and wheat (bigger grain with thin multiple layers of seed coat, namely, the bran that is separable easily). Hence, generally the millet grains are pulverized and the whole meal millet is utilized for food. This limits the usage of the millet only to flour based traditional foods such as *roti* and *mudde,* that too by the traditional consumers, and not in the form similar to cooked rice or wheat semolina.

Another drawback of the hitherto known millet milling processes is that, the foods based on whole meal happens to be sticky and slimy and also impart the characteristic odor.

These factors affect the sensory qualities and in turn the acceptability of the millet products.

Thus, neither a process for decortication of millet nor the decorticated finger millet are available in any part of the world to the best of the Applicant's knowledge.

### OBJECTS OF THE INVENTION:

The main object of the present invention is to provide a decorticated finger millet.

Another object of the present invention is to provide a decorticated finger millet having the physicochemical characteristics as therein described.

Another object of the present invention is to provide a process for preparation of decorticated finger millet.

Still another object of the present invention is to provide a process for preparation of decorticated finger millet, which can be cooked similar to rice or can be pulverized to prepare grits or flour similar to wheat for various food uses.

### DETAILED DESCRIPTION OF THE PRESENT INVENTION:

Accordingly, the present invention provides a process for decorticating finger millet (*Eleusine coracana*), said process comprising the steps of:
(a) soaking the finger millet in a potable water of about 0.4 (w/v),
(b) heating the hydrated finger millet at a temperature in the range of about 20-70°C for about 2-16 hrs to induce starch gelatinisation, rupture of granular structure, formation of lipid amylose complex and healing of cracks present in the endosperm,
(c) washing the finger millet obtained in step (b) with 2-3 volumes of potable water to remove the leachates and remove undesirable odor,
(d) steam-drying to drain excessive water absorbed by the finger millet grains obtained in step (c) at atmospheric pressure of about 5.0 Kg/cm² for about 2- 20 minutes, to induce retrogradation of starch, hardening of endosperm tissue and reduction in the intactness of the endosperm with seed coat,
(e) drying the finger millet grains obtained in step (d) in the temperature range of about 30 - 60°C to maintain a moisture level in the range of about 8-16% by mechanical drying or under the sun or shade, and
(f) decorticating the dried finger millet grains obtained from step (e) by soaking them again in water for about 10-15 minutes to remove the seed coat.

In a further embodiment, the decorticated finger millet produced by this method has the following physicochemical characteristics:

| | | |
|---|---|---|
| (a) | Appearance: | Spherical and opaque |
| (b) | Color (% whiteness): | Light Cream (10.8) |
| (c) | Hardness (Kg/cm²): | 7.1 |
| (d) | 1000 kernel wt (g): | 2.6 |
| (e) | 1000 kernel volume (ml): | 1.7 |
| (f) | Density (m/v): | 1.501 |
| (g) | Protein (g %): | 6.3 |
| (h) | Fat (g %): | 0.9 |
| (i) | Minerals (g%): | 1.0 |
| (j) | Acid insoluble ash (%): | 0.07 |
| (k) | Calcium (mg%): | 1.80 |
| (l) | Dietary Fiber (%): | 14.7 |
| (m) | Available carbohydrate (% by difference): | 66.5 |
| (n) | Phosphorous (mg%): | 109 |
| (o) | Phytate (mg %): | 142 |
| (p) | Polyphenols (mg %) (Catechin equivalent): | 67 |
| (q) | Equilibrium moisture content (%), at 30° C: | 68 |
| (r) | Solubility (%), at 30° C: | 8.5 |
| (s) | Swelling (%), at 30° C: | 190 |
| (t) | Swelling (%), at 80° C: | 270 and |
| (u) | Cooking time (min): | 5 |

The process thus involves:
(a) hydrating the millet near to its saturation moisture content;
(b) heat treating the hydrated millet to induce starch gelatinisation, rupture of granular structure, formation of lipid amylose complex and healing of cracks present in the endosperm;
(c) controlled drying the heat-treated millet to induce retrogradation of starch, hardening of endosperm tissue and reduction in the intactness of the endosperm with seed coat;
(d) moistening and short tempering the millet obtained from step "c" to impart leathery texture to the seed coat, and
(e) passing the millet thus obtained through conventional abrasive mills to detach/remove the seed coat.

In an embodiment of the present invention, the millet is optionally cleaned before soaking it in the water.

In another embodiment of the present invention, the heat-treated millet is moistened using potable water.

In an embodiment of the present invention, the seed coat detached during milling is aspired off.

The present invention more particularly provides a process for decorticating finger millet said process comprises:
(a) soaking or steeping the millet in a minimum of 0.4 (w/v) water at 20 -70° C for 2-16 hr;
(b) draining the adsorbed water if any and steaming the soaked millet either at atmospheric or at pressure up to 5.0 kg/cm², for 2-20 min;
(c) drying the millet obtained from the aforesaid step, to 8 - 16% moisture content by conventional mechanisms, and
(d) mixing the dried millet obtained from the aforesaid step, with 3 - 8% additional water, tempering for 10 - 15 min and decorticating the same in abrasive mills and aspirating off the seed coat.

In an embodiment of the present invention, said process for decortication most preferably comprises:
(a) cleaning the millet manually or mechanically;
(b) soaking or steeping the cleaned millet in a minimum of 0.4 (w/v) potable water at 20 - 70° C for 2- 16 hr;
(c) washing the millet with a minimum of 2 - 3 volumes of potable water till it is free from light floating surface contaminants, undesirable odor and the leachates;
(d) draining the adsorbed water if any and steaming the soaked millet either at atmospheric or at pressure up to 5.0 Kg/cm² for 2-20 min;
(e) drying the millet obtained from 'step d', to 8 - 16% moisture content in a mechanical drier maintained at 30 - 60° C or in sun/shade, and
(f) mixing the dried millet obtained from 'step e' with 3-8% additional water, tempering for 10 - 15 min and decorticating the same in abrasive mill and aspirating off the seed coat.

In still another embodiment of the present invention, the dried millet may be mixed with 4 - 8% additional water, tempered for 10-15 min, and decorticated, preferably, in an emery coated abrasive mill to 5 - 20% degree of decortication and the decorticated millet may be separated from the seed coat detached during decortication, mechanically or manually, by gravity, winnowing or by aspiration

Although, the invention is described in detail with reference to a specific embodiment thereof, it will be understood that, variations, which are functionally equivalent are within the scope of this invention. Indeed, various modifications of the invention, in addition to those shown and described therein, will became apparent to those skilled in the art from the pre-going description. Such modifications are intended to fall within the scope of the invention and appended claims.

The novel features of the process are that, it permits utilization of the millet grown at different agro-climatic conditions, kernels of varying size, shape, color and hardness.

Hydrating the millet near to its saturation moisture content and subjecting it to heat treatment by steam or any such other means modifies the characteristics of the biochemical components of the millet kernel. The notable changes or the modification are, the starch gelatinisation, rupture of its granular structure and formation of the lipid-amylose complex, besides healing the cracks present in the endosperm. Controlled drying, further induces an array of chemical and textural changes resulting in retrogradation of starch, hardening of the endosperm tissue and reducing the intactness of the seed coat with the endosperm.

Subsequently, incipient moistening and short duration tempering imparts leathery texture to the seed coat and facilitates its easy separation during decortication. Moreover, the process improves the overall nutritional qualities of the millet due to fixing of thiamine and some of the minerals with the endosperm, thereby preventing the loss of these nutrients during washing and cooking. Denaturing the enzyme inhibitors and lowering the concentration of polyphenols and phytates also contribute for the improvement in the nutritional quality of the millet prepared by this process. In addition, the shelf-life of the millet products is also improved due to inactivation of the lipases and hardening the endosperm.

The decorticated millet prepared following this process will be of light cream color, translucent or chalky texture with smooth surface, besides, it is free from seed coat and the characteristics musty odor, normally associated with the millet. Hence, it will have better consumer appeal, improved storage life and enhanced nutritional quality. Since, the decorticated millet contains complex carbohydrates, good amount of dietary fiber and micro-nutrients, it could be hypoglycemic and hypocholesterolemic. It may, not only be useful for conventional foods but also find utilization as a cereal base for several health foods namely food namely food for diabetes and functional foods such as slimming foods.

The novelty of the process lies in its simplicity, adaptability from home to industrial scale and improving the overall nutritional and culinary qualities of the millet without subjecting it to any chemical or health hazardous treatments.

### BRIEF DESCRIPTION OF THE ACCOMPANYING DRAWING:

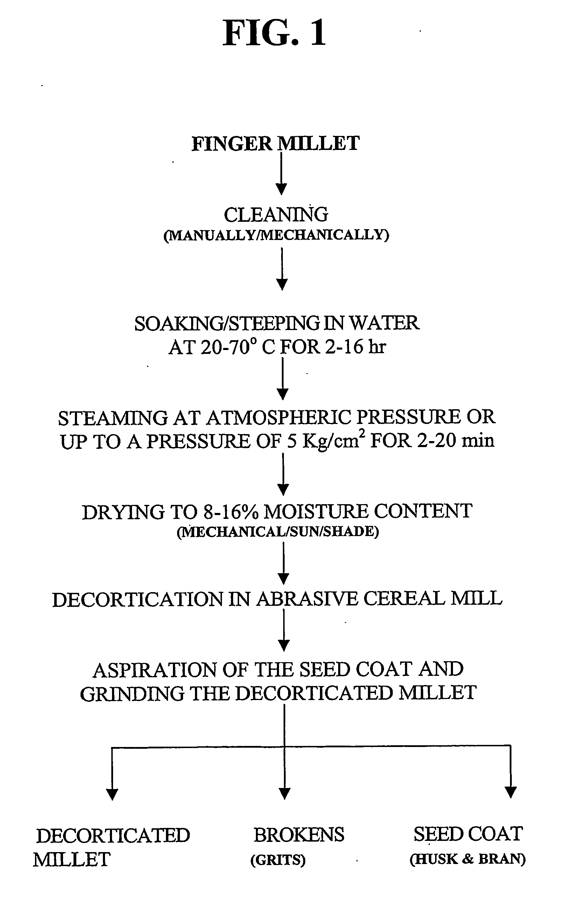

In the drawing accompanying this specification, **Figure 1****,** represents the salient features of the process for preparation of the decorticated millet.

### BRIEF DESCRIPTION OF THE ACCOMPANYING TABLES:

In the tables accompanying the specification,
**Table 1** represents the yield of milling fractions of millet milled as such and after moist-conditioning.

**Table 2** represents yield if milling fractions of millet milled as such and after moist-conditioning.

**Table 3** gives the physicochemical characteristics of the decorticated millet

The following examples are given by way of illustration of the present invention and therefore should not be construed to limit the scope of the present invention.

### Example-1

Twenty five kilograms of the millet cleaned off the extraneous matter manually was washed with a minimum of two volumes of potable water 2 times and soaked in 40 L water at 28° C for 12 hr. The soaked material was washed again to free it from the floatings and leachates and was collected over a 25 mesh metallic screen to drain off the adsorbed water, followed by spreading in 10 Nos. of 1.5' x 3' x 2" dimension metallic trays. The trays were placed one above another in an autoclave, the top tray was covered with another tray and the material was steamed at atmospheric pressure for 20 min. The steamed millet was dried to 12 % moisture content in a mechanical air drier maintained at 40° C. A portion of the dried millet was decorticated in an emery coated horizontal plate mill, adjusted to 1.4 mm clearance between the plates and the other portion was mixed with 5.0 % additional water, tempered for 10 min and decorticated in the same mill. The seed coat detached during milling was aspirated off. The decorticated millet (head grains) were separated from the grits (brokens) by sieving through 16 mesh (BSS) sieve. The milling fractions were equilibrated and weighed (Table 1).

**Table 1: Yield of milling fractions of millet milled as such and after moist-conditioning**

| **S. No.** | **Yield (g %)** | **Decorticated Without Moist Conditioning** | **Decorticated With Moist Conditioning** |
|---|---|---|---|
| 1. | Decorticated head grains | 45.0 | 81.5 |
| 2. | Brokens (crushed millet or grits) | 35.0 | 3.5 |
| 3. | Seed coat | 20.0 | 15.0 |
| 4. | Color (% Whiteness) | 6.5 | 9.0 |

### Example - 2

Twenty five kilograms of the millet cleaned off the extraneous matter manually was washed with a minimum of two volumes of potable water 2 times and soaked in 40 L water at 28° C for 12 hr. The soaked material was washed again to free it from the floatings and leachates and was collected over a 25 mesh (BSS) metallic screen to drain off the adsorbed water, followed by spreading in 10 Nos. of 1.5" x 3' x 2" dimension metallic trays. The trays were placed one above another in an autoclave, the top tray was covered with another tray and the material was steamed at 5 kg/cm² pressure for 2 min. The steamed millet was dried to 12% moisture content in a mechanical air drier maintained at 40° C. A portion of the dried millet was decorticated in an emery coated horizontal plate mill, adjusted to 1.4 mm clearance between the plates and the other portion was mixed with 5.0 % additional water, tempered for 10 min and decorticated in the same mill. The seed coat detached during milling was aspirated off. The decorticated millet (head grains) were separated from the grits (brokens) by sieving through mesh (BSS) sieve. The milling fractions were equilibrated and weighed.

**Table 2: yield if milling fractions of millet milled as such and after moist-conditioning**

| **S. No.** | **Yield (g %)** | **Decorticated Without Moist Conditioning** | **Decorticated With Moist Conditioning** |
|---|---|---|---|
| 1. | Decorticated head grains | 47.0 | 83.0 |
| 2. | Brokens (crushed millet or grits) | 33.0 | 1.5 |
| 3. | Seed coat | 20.0 | 15.5 |
| 4. | Color (% Whiteness) | 6.5 | 9.0 |

### Example - 3

One hundred kilo grams of finger millet was cleaned using destoner and was washed with a minimum of 2 volumes of potable water 2 times and soaked in 60 L water at 28° C for 12 hr. The soaked material was washed again to free from floatings and leachates and was collected over a 25 mesh metallic screen to drain off the adsorbed water, followed by spreading in 40 Nos. of 1.5' x 3' x 2" dimension metallic trays. Ten trays containing the soaked millet at a time, were placed one above another in an autoclave, the top tray was covered with another tray and steamed at atmospheric pressure for 20 min. The steamed millet was dried to 12% moisture content in a mechanical air drier maintained at 40° C. The product was graded by sifting through 1.4 mm and 1.0 mm opening metallic screens successively. The millet grains bigger than 1.4 mm, smaller than 1.4 and bigger than 1.0 mm, and smaller than 1.0 mm, diameter were collected separately. Thus graded millet was mixed with 5% additional water, tempered for 10 min and decorticated in a horizontal emery coated plate mill (fitted with 3' diameter and 6" thick plates) adjusted to 1.4, 1.2 and 1.0 mm clearance between the plates respectively. The seed coat was aspirated off and the decorticated millet was sifted in a vertical rotary sifter fitted with 0.9 mm screen to separate the decorticated head grains from the brokens or grits. The fractions were equilibrated and weighed. The yield of decorticated head grains, brokens and the seed coat were 80.6, 4.1 and 15.3 % respectively. The information on some of quality attributes of the native and the decorticated millet are presented in Table 3.

**The main advantages of the present invention are:**
1. Soaking the millet in water hydrates the kernels to their near saturation point (32 ± 2% moisture content) and steaming the hydrated millet gelatinizes its starch content, ruptures its granular structure and facilitates amylose and lipids complexing. In other words, the retrogradation of the starch occurs during wet heat treatment and as a result, the floury endosperm modules to corneus texture, thereby preventing its breakage during decortication. On soaking, the grains swell and steaming the same heals the fissures present in the endosperm. Further, drying the steamed millet contracts the endosperm. These physico-chemical changes reduce the intactness between the seed coat and the starchy endosperm and also facilitate easy decortication.
2. The decorticated millets could be cooked to soft texture similar to rice just within 5 min, which has not been possible hitherto and also it could be pulverized into flour or grits for conventional food preparations.
3. One of the milling by-products, namely the grits could be used similar to wheat semolina or soji, or it could be pulverized to flour for traditional foods.
4. There exists scope to prepare flaked, popped and other novelty foods from the decorticated millet similar to other cereals such as rice, wheat and maize.
5. By this process, the nutritional quality of the millet improves because of the enhanced retention of some of the water-soluble nutrients and reduction in the concentration of the antinutritional factors such as phytates, enzyme inhibitors and the seed borne microflora.
6. The storage quality of the processed millet is also enhanced because of inactivation of lipase as well as hardening of the endosperm.
7. It is altogether a new process for processing of millet which is not followed hitherto anywhere in the country and abroad to the best of our knowledge.

**Table 3: physicochemical characteristics of the decorticated millet**

| Characteristics | Native | Decorticated |
|---|---|---|
| Appearance: | Spherical | Spherical and opaque |
| Color (% whiteness): | Brown (3.2) | Light Cream (10.8) |
| Hardness (Kg/cm²): | 1.1 | 7.1 |
| 1000 kernel wt (g): | 2.9 | 2.6 |
| 1000 kernel volume (ml): | 2.1 | 1.7 |
| Density (m/v): | 1.379 | 1.501 |
| Protein (g%): | 8.1 | 6.3 |
| Fat (g %): | 1.5 | 0.9 |
| Minerals (g%): | 1.9 | 1.0 |
| Acid insoluble ash (%): | 0.12 | 0.07 |
| Calcium (mg%): | 317 | 1.80 |
| Dietary Fiber (%): | 22.2 | 14.7 |
| Available carbohydrate (% by difference): | 53.9 | 66.5 |
| Phosphorous (mg %): | 211 | 109 |
| Phytate (mg %): | 236 | 142 |
| Polyphenols (mg %) (Catechin equivalent): | 265 | 67 |
| Equilibrium moisture content (%), at 30° C: | 33 | 68 |
| Solubility (%), at 30° C: | 3.9 | 8.5 |
| Swelling (%), at 30° C: | 70 | 190 |
| Swelling (%), at 80° C: | 260 | 270 and |
| Cooking time (min): | 17 | 5 |

## Claims

1. A process for decorticating finger millet (*Eleusine coracana*), said process comprising the steps of:
(a) soaking the finger millet in a potable water of about 0.4 (w/v),
(b) heating the hydrated finger millet at a temperature in the range of about 20-70°C for about 2-16 hrs to induce starch gelatinisation, rupture of granular structure, formation of lipid amylose complex and healing of cracks present in the endosperm,
(c) washing the finger millet obtained in step (b) with 2-3 volumes of potable water to remove the leachates and remove undesirable odor,
(d) steam-drying to drain excessive water absorbed by the finger millet grains obtained in step (c) at atmospheric pressure of about 5.0 Kg/cm² for about 2- 20 minutes, to induce retrogradation of starch, hardening of endosperm tissue and reduction in the intactness of the endosperm with seed coat,
(e) drying the finger millet grains obtained in step (d) in the temperature range of about 30 - 60°C to maintain a moisture level in the range of about 8-16% by mechanical drying or under the sun or shade, and
(f) decorticating the dried finger millet grains obtained from step (e) by soaking them again in water for about 10-15 minutes to remove the seed coat.

2. A process as claimed in claim 1, wherein the millet is cleaned before soaking it in the water.

3. A process as claimed in claim 1, wherein the decorticated millet thus produced has the following physicochemical characteristics:
| | | |
|---|---|---|
| (a) | Appearance: | Spherical and opaque |
| (b) | Color (% whiteness): | Light Cream (10.8) |
| (c) | Hardness (Kg/cm²): | 7.1 |
| (d) | 1000 kernel wt (g): | 2.6 |
| (e) | 1000 kernel volume (ml): | 1.7 |
| (f) | Density (m/v): | 1.501 |
| (g) | Protein (g %): | 6.3 |
| (h) | Fat (g %): | 0.9 |
| (i) | Minerals (g %): | 1.0 |
| (j) | Acid insoluble ash (%): | 0.07 |
| (k) | Calcium (mg %): | 1.80 |
| (l) | Dietary Fiber (%): | 14.7 |
| (m) | Available carbohydrate (% by difference): | 66.5 |
| (n) | Phosphorous (mg %): | 109 |
| (o) | Phytate (mg %): | 142 |
| (p) | Polyphenols (mg %) (Catechin equivalent): | 67 |
| (q) | Equilibrium moisture content (%), at 30° C: | 68 |
| (r) | Solubility (%), at 30° C: | 8.5 |
| (s) | Swelling (%), at 30° C: | 190 |
| (t) | Swelling (%), at 80° C: | 270 and |
| (u) | Cooking time (min): | 5. |

## Patentansprüche

1. Verfahren zum Schälen von Fingerhirse (Eleusine coracana), wobei das Verfahren die folgenden Schritte umfasst:
(a) Einweichen der Fingerhirse in Trinkwasser von ungefähr 0,4 (w/v),
(b) Erwärmen der hydratisierten Fingerhirse bei einer Temperatur im Bereich von ungefähr 20-70°C für ungefähr 2 - 16 Stunden, um Stärkegelbildung, Reißen der körnigen Struktur, Bildung eines Lipid-Amylose-Komplexes und eine Heilung von Rissen, die im Endosperm vorhanden sind, herbeizuführen,
(c) Waschen der Fingerhirse, die in Schritt (b) erhalten wurde, mit dem 2-3-fachen Volumen an Trinkwasser, um die Ausschwemmungen zu entfernen und um ungewünschten Geruch zu entfernen,
(d) Dampftrocknen, um überschüssiges Wasser, das von den in Schritt (c) erhaltenen Fingerhirsekörnern absorbiert wurde, bei Atmosphärendruck von ungefähr 5,0 Kg/cm² für ungefähr 2-20 Minuten zu entfernen, um Retrogradation von Stärke, Härten des Endospermgewebes und Verringerung der Unversehrtheit des Endosperms mit Samenschale herbeizuführen,
(e) Trocknen der in Schritt (d) erhaltenen Fingerhirsekörner im Temperaturbereich von ungefähr 30 - 60°C, um durch mechanische Trocknung oder in der Sonne oder im Schatten einen Feuchtiglceitsgrad im Bereich von ungefähr 8-16% aufrechtzuerhalten, und
(f) Schälen der aus Schritt (e) erhaltenen getrockneten Fingerhirsekörner, indem sie nochmals für 10-15 Minuten in Wasser eingeweicht werden, um die Samenschale zu entfernen.

2. Verfahren nach Anspruch 1, wobei die Hirse gereinigt wird, bevor sie in dem Wasser eingeweicht wird.

3. Verfahren nach Anspruch 1, wobei die so hergestellte geschälte Hirse die folgenden physikochemischen Eigenschaften aufweist:
| | | |
|---|---|---|
| (a) | Aussehen: | spherisch und opak |
| (b) | Farbe (% Weiße): | hell cremefarben (10,8) |
| (c) | Härte (Kg/cm²): | 7,1 |
| (d) | 1000 Kernel Gew. (g): | 2,6 |
| (e) | 1000 Kernel Volumen (ml): | 1,7 |
| (f) | Dichte (m/v): | 1,501 |
| (g) | Eiweiß (g %): | 6,3 |
| (h) | Fett (g %): | 0,9 |
| (i) | Mineralstoffe (g %): | 1,0 |
| (j) | in Säure unlösliche Asche (%): | 0,07 |
| (k) | Calcium (mg%): | 1,80 |
| (l) | Ballaststoffe (%): | 14,7 |
| (m) | verfügbare Kohlenhydrate (% durch Diff.): | 66,5 |
| (n) | Phosphor (mg %): | 109 |
| (o) | Phytat (mg %): | 142 |
| (p) | Polyphenole (mg %) (Catechin-Equivalent): | 67 |
| (q) | Gleichgewichtsfeuchtigkeitsgehalt (%) bei 30°C: | 68 |
| (r) | Löslichkeit (%) bei 30°C: | 8,5 |
| (s) | Aufquellen (%) bei 30°C: | 190 |
| (t) | Aufquellen (%) bei 80°C: | 270 und |
| (u) | Kochzeit (Min.): | 5. |

## Revendications

1. Procédé pour décortiquer du mil rouge (*Eleusine coracana*), ledit procédé comprenant les étapes consistant à :
(a) tremper le mil rouge dans de l'eau potable à raison d'environ 0,4 (p/v),
(b) chauffer le mil rouge hydraté à une température comprise dans la plage d'environ 20 à 70 °C pendant environ 2 à 16 heures pour induire la gélatinisation de l'amidon, la rupture de la structure granulaire, la formation d'un complexe amylose-lipides et la cicatrisation de craquelures présentes dans l'endosperme,
(c) laver le mil rouge obtenu à l'étape (b) avec 2 à 3 volumes d'eau potable pour éliminer les lixiviats et pour éliminer les odeurs indésirables,
(d) sécher à la vapeur pour drainer l'eau excédentaire absorbée par les grains de mil rouge obtenus à l'étape (c) à une pression atmosphérique d'environ 5,0 kg/cm² pendant environ 2 à 20 minutes pour induire la rétrogradation de l'amidon, le durcissement du tissu de l'endosperme et la réduction de l'intégrité de l'endosperme avec le tégument,
(e) sécher les grains de mil rouge obtenus à l'étape (d) dans la plage de températures d'environ 30 à 60 °C pour maintenir un niveau d'humidité dans la plage d'environ 8 à 16 % par séchage mécanique ou bien au soleil ou à l'ombre, et
(f) décortiquer les grains de mil rouge séchés obtenus à l'étape (e) en les trempent de nouveau dans l'eau pendant environ 10 à 15 minutes pour retirer les téguments.

2. Procédé selon la revendication 1, dans lequel le mil est lavé avant d'être trempé dans l'eau.

3. Procédé selon la revendication 1, dans lequel le mil décortiqué ainsi produit présente les caractéristiques physicochimiques suivantes :
| | |
|---|---|
| (a) Aspect : | sphérique et opaque |
| (b) Couleur (% de blancheur) : | blanc-crème (10,8) |
| (c) Dureté (kg/cm²) : | 7,1 |
| (d) Poids de 1000 grains (g) : | 2,6 |
| (e) Volume de 1000 grains (ml) : | 1,7 |
| (f) Masse volumique (m/v) : | 1,501 |
| (g) Protéines (g %) : | 6,3 |
| (h) Graisses (g %) : | 0,9 |
| (i) Minéraux (g %) : | 1,0 |
| (j) Cendres insolubles dans l'acide (%) : | 0,07 |
| (k) Calcium (mg%): | 1,80 |
| (l) Fibres alimentaires (%) : | 14,7 |
| (m) Glucides disponibles (% par différence) : | 66,5 |
| (n) Phosphore (mg %) : | 109 |
| (o) Phytates (mg %) : | 142 |
| (p) Polyphénols (mg %) (équivalant catéchine) : | 67 |
| (q) Teneur en humidité à l'équilibre (%) à 30 °C : | 68 |
| (r) Solubilité (%) à 30 °C : | 8,5 |
| (s) Gonflement (%) à 30 °C : | 190 |
| (t) Gonflement (%) à 80 °C : | 270 et |
| (u) Temps de cuisson (min) : | 5 |
